# EUROPÄISCHE PATENTSCHRIFT

(11) **EP 1 710 460 B1**
(45) Veröffentlichungstag und Bekanntmachung des Hinweises auf die Patenterteilung: **18.02.2009**
(21) Anmeldenummer: 05007689.2
(22) Anmeldetag: 08.04.2005
(51) Int. Cl.: F16D 13/64, F16D 69/04

(54) **Elastisch gelagerte Kupplungskomponenten**
Elastically supported clutch component
Pièce détachée d'embrayage soutenue élastiquement

(43) Veröffentlichungstag der Anmeldung: 11.10.2006
(73) Patentinhaber: AUDI AG, 85045 Ingolstadt (DE)
(72) Erfinder: Krupka, Mario, 86477 Adelsried (DE)
(74) Vertreter: Deckers, Hellmuth Alexander

(56) Entgegenhaltungen:
- US-A- 5 143 184
- US-A- 5 305 864
- US-A- 6 062 364

## Beschreibung

Die Erfindung betrifft elastisch gelagerte Kupplungskomponenten.

In den bekannten Kupplungssystemen für die Verbindung von Antriebsstrang und Getriebe in Kraftfahrzeugen wird der Drehmomentschluß zwischen der Welle des Antriebaggregats (Kurbelwelle) und dem Getriebe durch eine Reibungskupplung hergestellt, wobei eine harte Andruckplatte oder Druckplatte (meist aus Metall, insbesondere Grauguß) mit einer Schwungscheibe wechselwirkt über eine Mitnehmerscheibe oder Kupplungsscheibe, die in herkömmlicher Weise eine Metallplatte als Trägerplatte mit darauf durch Nieten, Kleben oder andere wärmefeste Befestigungsmittel verbundenen Reibbelägen umfaßt.

In Kupplungssystemen insbesondere bei Rennfahrzeugen, in denen auf ein sanftes Einkuppeln weniger Wert gelegt wird, werden die Reibbeläge auch aus gesinterten Werkstoffen ausgeführt, wobei diese insbesondere durch Aufsintern oder Nieten auf der Grundplatte befestigt werden.

Aus dem Patent US 6,062,364 A ist eine modular aufgebaute Kupplung bekannt, bei der Kupplungsbeläge mittels einer Metallplatte mit Rahmen auf der Kupplungsmitnehmerscheibe befestigt sind. Die Kupplungsbeläge sind Sinterkörper und haben einen trapezartigen Querschnitt, wodurch sie in einer entsprechenden Ausformung des Rahmens fixiert werden. In dem Teil des Rahmens der Metallplatte zwischen deren Basis und dem Sinterkörper ist ein gewelltes Metalldrahtsieb eingelegt, der Zwischenraum ist mit Graphitpulver gefüllt. Die Beläge werden aus einer Mischung von keramischem Pulver, weiterem Graphit und Kupfer- und Zinn-Pulver durch Pressen und Sintern geformt, wodurch sich die Paßform in dem Rahmen von selbst ergibt. Der Sinterdruck wird so gewählt, daß das gewellte Metalldrahtsieb nicht flachgedrückt wird.

Für hohe zu übertragende Drehmomente und hohe Wärmelasten werden Reibbeläge aus MetallKeramik-Verbundwerkstoffen ("CMC", ceramic metal composites) bevorzugt. Dabei werden entweder Scheibensegmente aus diesen Werkstoffen auf einer Metallträgerplatte befestigt, oder die gesamte Mitnehmerscheibe wird aus diesem Werkstoff hergestellt, der in diesem Fall bevorzugt mit hochfesten Fasern verstärkt ist. Die Kombination einer derart harten und wenig elastischen Mitnehmerscheibe mit einer ebenfalls harten Druckplatte erfordert hohe Präzision bei der Justierung der beiden Scheiben, damit die im Reibschluß stehenden Flächen immer vollständig im Kontakt sind. Die Konstruktion muß darüber hinaus so ausgeführt werden, daß sich bei der Erwärmung während des Betriebs die Aufhängung der Platten nicht verzieht. Das Übergangsverhalten vom ausgekuppelten zum eingekuppelten Zustand ist in einer solchen Kombination sehr abrupt, das bedeutet, daß bereits geringste Abstandsänderungen zwischen den Platten zu hoher Änderung des übertragenen

Drehmoments führen. Dieses abrupte Verhalten der Kupplung ist gewöhnungsbedürftig und erfordert hohes fahrerisches Geschick; bisher ist ein derartiges Verhalten der Kupplung nur in Sportwagen akzeptiert. Weiter treten im Betrieb ungleichmäßige Flächenpressungen über die Oberfläche der im Friktionskontakt stehenden Platten und Reibelemente auf. Dies führt naturgemäß zu ungleichmäßiger Abnutzung der Reibflächen und damit zu einer Verstärkung der Ungleichmäßigkeit über die Flächen und damit zu einer rascheren Abnutzung als bei einer erwünschten gleichmäßigen Flächenpressung.

Es besteht daher die Aufgabe, ein Kupplungssystem mit Komponenten aus CMC-Werkstoffen, insbesondere aus faserverstärkter Keramik, bereitzustellen, in dem der Übergang vom ausgekuppelten Zustand zum eingekuppelten Zustand weniger abrupt ist. Ein derartiges sanftes Ansprechen der Kupplung wird als "komfortabel" bezeichnet.

Diese Aufgabe wird gelöst durch ein Kupplungssystem, bei dem die Mitnehmerscheibe oder Kupplungsscheibe eine steife Trägerplatte aus Metall oder einer faserverstärkten Keramik umfaßt, auf der Reibelemente insbesondere aus faserverstärkter Keramik mit Hilfe einer druckelastischen Zwischenlage angebracht sind. Die druckelastische Zwischenlage muß dabei sowohl eine hohe Verformungsstabilität gegen Scherung in einer Ebene parallel zur Trägerplatte aufweisen, als auch eine ausreichende Kompressibilität in einer Richtung senkrecht zur Ebene der Trägerplatte.

Die Erfindung betrifft daher ein Kupplungssystem mit einer Mitnehmerscheibe, die eine Trägerplatte aus Metall oder faserverstärkter Keramik umfaßt und darauf mit einer druckelastischen Zwischenlage befestigte Reibbeläge, wobei als druckelastische Zwischenlage eine Folie aus expandiertem und rekomprimiertem Graphit eingesetzt ist. In üblicher Weise wechselwirkt diese Mitnehmer-oder Kupplungsscheibe mit einer Schwungscheibe und einer Druckplatte.

Dabei ist es bevorzugt, daß die querschnittsbezogene Rückstellkraft der druckelastischen Zwischenlage von 0,1 MPa bis 10 MPa beträgt, insbesondere 1 MPa bis 8 MPa. Die Druckfestigkeit (Kompressionsspannung) beträgt bevorzugt 75 MPa bis 400 MPa, besonders bevorzugt 100 MPa bis 350 MPa, und insbesondere 150 MPa bis 300 MPa. Der Kompressionsmodul (querschnittsbezogene Rückstellkraft der druckelastischen Zwischenlage bezogen auf die Kompression, auch Druckelastizitätsmodul genannt, Young's modulus) beträgt bevorzugt 25 MPa bis 350 MPa, besonders bevorzugt 50 MPa bis 250 MPa. Die bleibende Verformung (Druckverformungsrest) der druckelastischen Zwischenlage beträgt bevorzugt maximal 40 %. Als bleibende Verformung wird dabei die Dickenänderung bezeichnet, die nach der Beanspruchung und Entlastung innerhalb eines Zeitraums von 5 Minuten nach der Entlastung gemessen wird. Dabei ist es vorteilhaft, daß sowohl die jeweils nach 5 Zyklen von Be- und Entlastung gemessenen Werte für die Druckelastizität als auch die bleibende Verformung um nicht mehr als 10 % von den Werten bei der ersten Belastung unterscheiden.

Die Erfindung betrifft weiter ein Kupplungssystem mit einer Druckplatte oder Andruckplatte und einer Mitnehmerscheibe, wobei die letztere eine Trägerplatte umfaßt, auf der die Reibbeläge so befestigt sind, daß zwar eine Bewegung in Richtung senkrecht zur Ebene der Trägerplatte zugelassen ist, jedoch nur ein begrenztes Spiel von 0,01 mm bis 0,5 mm in einer beliebigen Richtung in der Plattenebene zugelassen ist. Insbesondere muß die Befestigung den charakteristischen Eigenschaften der verwendeten keramischen Materialien entsprechen, es darf daher nur eine möglichst isotrope Kompressionsbeanspruchung auftreten.

Ein geeignetes druckelastisches Material muß eine Dauertemperaturbeanspruchung von ca. 300 °C ohne Schaden ertragen; seine Elastizität sollte sich während der Nutzungsdauer möglichst wenig oder nicht verändern. Aus diesem Grund sind Polymerwerkstoffe und gummielastische Materialien nicht oder nur in begrenztem Umfang einsetzbar.

Membranfedern (Federteller) aus Stahl oder anderen Metallen sind in Verbindung mit einer Befestigung durch Nieten ungünstig, da sie eine hohe Wärmedehnung und eine Ermüdung über die Gebrauchsdauer aufweisen.

Als besonders geeignete Werkstoffe für die druckelastische Zwischenlage haben sich flexible Folien aus expandiertem und rekomprimiertem Graphit erwiesen. Dieses Material ist beispielsweise in dem Datenblatt "Grafoil® Flexible Graphite" der Fa. Graftech Inc. beschrieben. Diese Folien werden, abhängig von ihrer Vorgeschichte bei der Rekomprimierung, anfänglich durch Druck nur wenig irreversibel verformt, beim Überschreiten einer maximalen Dichte verbleibt eine reversible Druckelastizität von bis zu 7 % der Dicke der Folie bei dieser maximalen Dichte. Die genannten Graphitfolien sind auch durch das Einbringen von Lochblechen, Spießblechen oder Glattblechen zu verstärken, soweit der Elastizitätsmodul bei der Druckbeanspruchung alleine nicht ausreicht. Mit derart verstärkten Graphitfolien läßt sich ein Druckmodul von bis zu 5 GPa erreichen. Der Druckmodul ist (bei größerem Verformungsweg) von der Druckspannung abhängig. Die Temperaturbeständigkeit derartiger Folien an Luft reicht bis zu 550°C.

Die Erfindung betrifft weiter ein Verfahren zur Befestigung von Kupplungsbelägen aus faserverstärkten keramischen Werkstoffen auf einer Trägerplatte mit einer druckelastischen Zwischenlage aus einer Folie aus expandiertem und rekomprimiertem Graphit zwischen Trägerplatte und Kupplungsbelägen. Dies ist beispielsweise durch Nieten möglich. Bei den Untersuchungen, die der vorliegenden Erfindung zugrunde lagen, hat sich jedoch herausgestellt, daß besonders vorteilhafte Anbindungstechniken in diesem Fall Verbindungen mit Nieten sind, die nach den Verfahren des sogenannten" Clinch-Nietens" und des "Taumel-Clinch-Nietens" verformt werden, und weiter das sogenannte "Taumel-Clinchen".

Bei einem gemäß Clinch-Nieten verformten Niet wird ein Bolzen aus einem leicht verformbaren Material wie weichem Stahl, Leichtmetallen, Kupfer oder Messing mit einem Setzkopf und einem massiven, hohlen oder angebohrten Nietschaft durch ein gestanztes oder gebohrtes und entgratetes, gefastes Nietloch gesteckt und an dem Setzkopf abgewandten Ende umgeformt durch Einwirkung eines Stempels, der das Bolzenende derart verformt, daß es formschlüssig in das gefaste obere Ende der Bohrung in Form eines Schließkopfs paßt.

Bei einem gemäß Taumel-Clinch-Nieten verformten Niet wird ein Bolzen aus einem leicht verformbaren Material wie weichem Stahl, Leichtmetallen, Kupfer oder Messing mit einem Setzkopf und einem massiven, hohlen oder angebohrten Nietschaft durch ein gestanztes oder gebohrtes und entgratetes, gefastes Nietloch gesteckt und an dem Setzkopf abgewandten Ende umgeformt durch Einwirkung eines in Taumelbewegung versetzten Stempels, der das Bolzenende derart verformt, daß es formschlüssig in das gefaste obere Ende der Bohrung in Form eines Schließkopfs paßt.

Eine weitere ebenfalls bevorzugte Befestigungstechnik ist das sogenannte "Taumel-Clinchen", das jedoch nur bei metallischen Trägerplatten anwendbar ist. Dabei wird durch einen Stempel in Taumelbewegung die Trägerplatte an der Stelle, an das keramische Reibelement gelocht ist, in dieses Loch füllend verformt, wobei eine stiftförmige Ausbuchtung in der Trägerplatte erzeugt wird, und der Kopf des Stifts bei dieser Verformung an der der Platte abgewandten Seite der keramischen Auflage pilzhutförmig in Form eines Schließkopfes verbreitert wird. Das Loch in der keramischen Auflage ist an dieser Seite mit einer Fase versehen, vorzugsweise in einem Winkel von 1° bis 10°, und bis zu einer Tiefe von 20 % bis 50 %, gerechnet als Anteil von der Summe der Dicken von Trägerplatte und Reibelement.

Bei einer erfindungsgemäßen Ausführung eines Kupplungssystems aus einer metallischen oder einer aus Keramik hergestellten Trägerplatte mit einer druckelastischen Zwischenlage aus einer Folie aus expandiertem und rekomprimiertem Graphit und Reibelementen aus Keramik, die auf der Trägerplatte befestigt sind, ergibt sich im Vergleich zu einer starren Befestigung ein erheblich weicheres Ansprechen der Kupplung. Es ist bevorzugt, daß die Reibelemente rotationssymmetrisch verteilt sind, und in einer weiter bevorzugten Ausführung mindestens 3 bis zu vorzugsweise 12 Reibplatten umfassen. Dabei sind solche Keramik-Materialien bevorzugt, deren Matrix im wesentlichen aus Siliciumcarbid besteht, und die mit Fasern aus Kohlenstoff verstärkt sind.

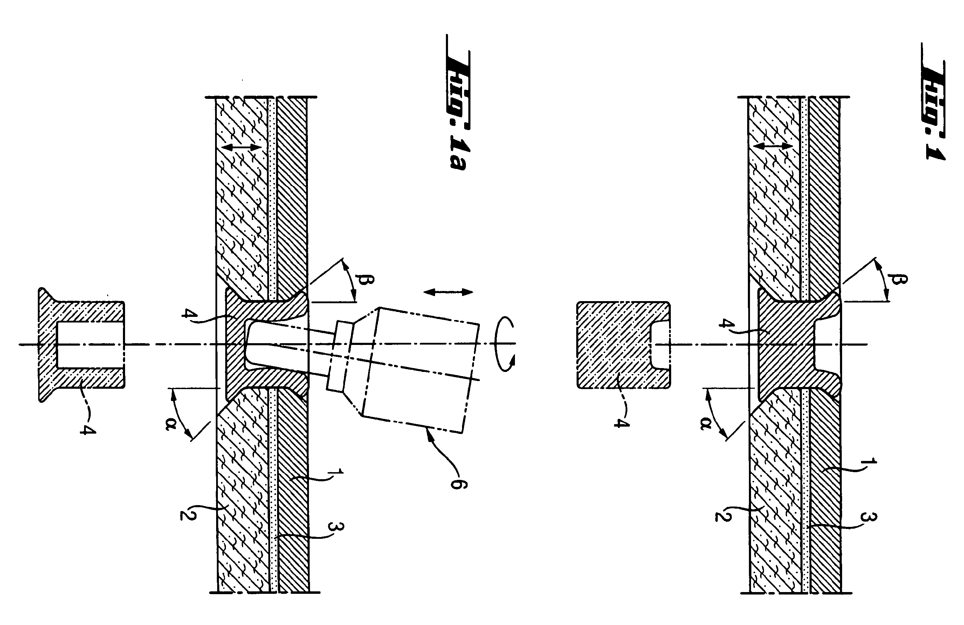

Die Erfindung wird durch die Zeichnungen weiter erläutert. Dabei zeigen
- Fig.1: einen Schnitt durch eine Mitnehmerscheibe umfassend eine Trägerplatte 1 mit aufgesetztem Reibelement 2 aus faserverstärkter Keramik mit einer mit einer druckelastischen Zwischenlage 3 aus einer Folie aus expandiertem und rekomprimiertem Graphit, wobei die Verbindung hier durch einen Niet **4** bewirkt wird, der nach dem Verfahren des Clinch-Nietens verformt ist,
- Fig.1a: einen Schnitt durch eine Mitnehmerscheibe umfassend eine Trägerplatte **1** mit aufgesetztem Reibelement **2** aus faserverstärkter Keramik mit einer mit einer druckelastischen Zwischenlage **3** aus einer Folie aus expandiertem und rekomprimiertem Graphit, wobei die Verbindung hier durch einen Niet 4 bewirkt wird, der nach dem Verfahren des Taumel-Clinch-Nietens verformt ist,

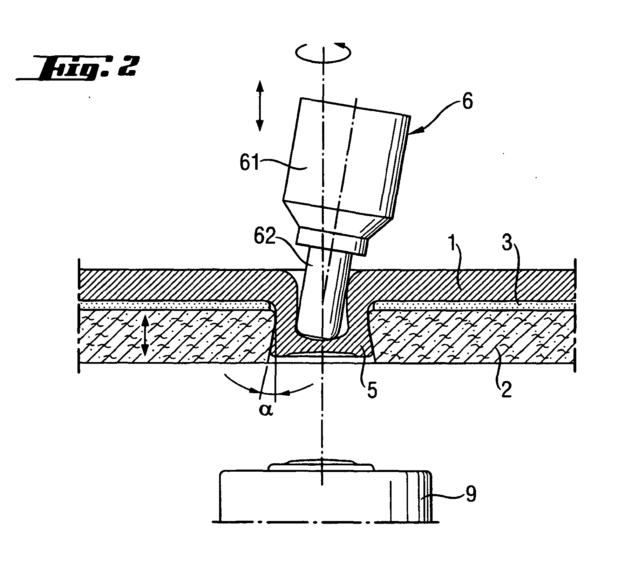

- Fig. 2: einen Schnitt durch eine Mitnehmerscheibe umfassend eine Trägerplatte **1** mit aufgesetztem Reibelement **2** aus faserverstärkter Keramik mit einer mit einer druckelastischen Zwischenlage **3** aus einer Folie aus expandiertem und rekomprimiertem Graphit, wobei die Verbindung hier durch einen Niet **5** bewirkt wird, der nach dem Verfahren des Taumel-Clinchens aus dem Blech der Trägerplatte **1** ausgeformt ist, und

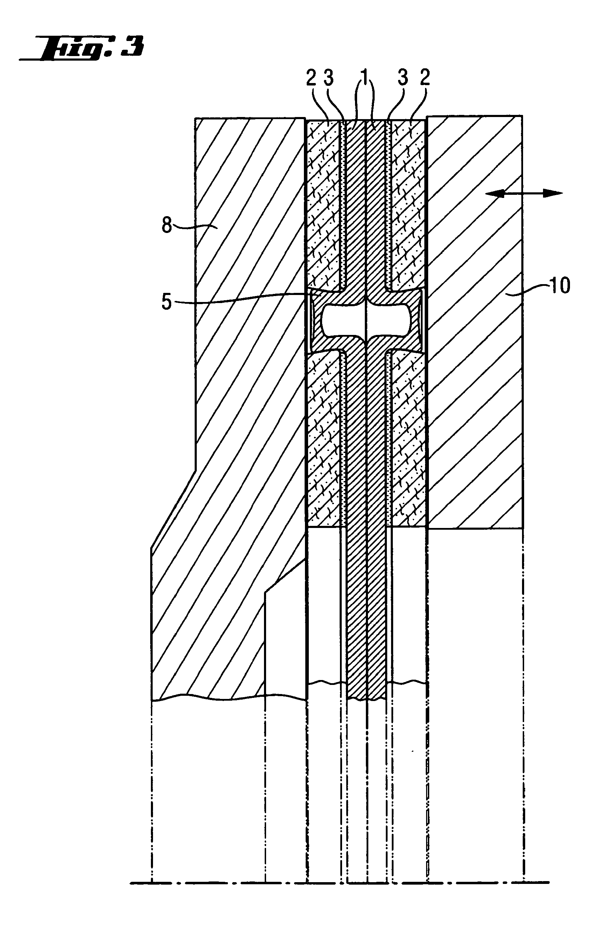

- Fig. 3: als Schnitt einen schematischen Aufbau eines Kupplungssystems mit einer druckelastischen Zwischenlage aus einer Folie aus expandiertem und rekomprimiertem Graphit, wobei die aus der Kupplungsträgerplatte 1 mit über einer druckelastischen Zwischenlage 3 angebrachten Reibelementen 2 zusammengesetzte Mitnehmerscheibe oder Kupplungsscheibe im Reibungseingriff mit einer Druckplatte 10 und einer Schwungscheibe 8 dargestellt ist.

Die in Fig. 1 dargestellte Befestigung des keramischen Reibelements **2** auf der Trägerplatte **1** durch den Clinch-Niet **4** ist gegenüber der Befestigung mit herkömmlichen Nieten besonders für hochfeste Verbindungen geeignet. Ein einfacher, zylindrischer Niet wird durch die zu verbindenden Materialien geführt. Dabei bildet der Niet **4** eine Wulst, der die Fase (hier mit einem Winkel β von ca. 30° dargestellt) im Loch der Trägerplatte **1** ausfüllt. Das vorgeformte Loch in dem keramischen Reibelement **2** muß außer einer einseitigen Fase (hier mit einem Winkel α von 45° dargestellt) keine geometrischen Besonderheiten aufweisen. Der Niet **4** läßt sich hinsichtlich Material und Geometrie an die verschiedenen Materialdicken für Reibelement **2**, druckelastischer Zwischenlage **3** aus einer Folie aus expandiertem und rekomprimiertem Graphit und Trägerplatte **1** einfach anpassen. Als vorteilhaft haben sich Loch- bzw. Nietdurchmesser zwischen 3 mm und 8 mm herausgestellt.

Die in Fig. 1a dargestellte Befestigung des keramischen Reibelements **2** auf der Trägerplatte **1** durch den Taumel-Clinch-Niet **4** ist eine weitere Verbesserung der Befestigungstechnik und ist ebenfalls für hochfeste Verbindungen geeignet. Ein einfacher, zylindrischer Niet mit tieferen Hohlraum als in Fig. **1** wird in das angefaste Loch des Reibelements **2** und die entsprechende Aussparung der druckelastischen Zwischenlage **3** aus einer Folie aus expandiertem und rekomprimiertem Graphit gesteckt und schließt auf der entgegengesetzten Seite der Trägerplatte 1 bündig ab; der Niet **4** wird dann mit durch einen kombinierten Zieh- und Preßvorgang hier mittels eines Stempels **6,** der eine taumelnde Bewegung ausführt, nur umgeformt bzw. durch die zu verbindenden Materialien geführt, die dabei nicht geschnitten werden. Dabei bildet der Niet **4** eine Wulst, der die Fase (hier mit einem Winkel β von ca. 30° dargestellt) im Loch der Trägerplatte **1** ausfüllt. Das vorgeformte Loch in dem keramischen Reibelement **2** muß außer einer einseitigen Fase (hier mit einem Winkel α von 45° dargestellt) keine geometrischen Besonderheiten aufweisen. Der Niet **4** läßt sich hinsichtlich Material und Geometrie an die verschiedenen Materialdicken für Reibelement **2**, druckelastischer Zwischenlage **3** aus einer Folie aus expandiertem und rekomprimiertem Graphit und Trägerplatte 1 einfach anpassen. Als vorteilhaft haben sich Loch- bzw. Nietdurchmesser zwischen 3 mm und 8 mm herausgestellt.

Die in Fig. 2 dargestellte Befestigung des keramischen Reibelements **2** auf der (hier metallischen) Trägerplatte 1 erfolgt durch Verformung der Trägerplatte ohne einen zusätzlichen Niet, wobei das Material der Trägerplatte **1** mittels eines taumelnden Stempels 6, von dem hier die Aufnahme **61** und ein Stift oder Bolzen **62** dargestellt sind, durch eine Aussparung in der elastischen Zwischenlage **3** aus einer Folie aus expandiertem und rekomprimiertem Graphit und die Bohrung des sprödharten Keramikmaterials des keramischen Reibelements **2** in einen hier abgehobenen Gegenstempel **9** gedrückt wird. Das keramische Reibelement **2** weist wieder eine Fase mit einem Winkel α auf. Der Gegenstempel **9** ist so geformt, daß in Wechselwirkung mit dem Bolzen **62** das verformte Material die Fase und das Loch füllend auseinanderfließt. Das Vorlochen und Anfasen des Reibelements **2** analog dem Verfahren beim Clinch-Nieten ist erforderlich. Die Besonderheit besteht hier darin, die geringeren Stempelkräfte gegenüber den herkömmlichen Niet- und Durchsetzungsverfahren für die Befestigung bruchempfindlicher keramischer Reibelemente zu nutzen.

Erfindungsgemäß kann mittels eines der genannten Durchsetzungsverfahren die Befestigung eines nicht umformbaren Materials (hier die Reibelemente) auf einer Trägerplatte mit druckelastischer Zwischenlage aus einer Folie aus expandiertem und rekomprimiertem Graphit erfolgen. Dickenunterschiede von 1 : 4 zwischen den verschiedenen Teilen der Kupplungsscheibe oder Mitnehmerscheibe sind beherrschbar, wodurch beispielsweise dünne Trägerplatten mit Materialstärken von 1 mm bis 2 mm mit Keramik-Reibelementen von bis zu 8 mm Dicke verbunden werden können.

Diese Verbindung kann sowohl statische als auch dynamische Belastungen in radialer und axialer Richtung aufnehmen. Es ist wichtig, die Oberfläche an der Verbindungsstelle ohne Vorsprung auf der Seite der Reibelemente **2** herstellen zu können, damit die ansonsten erforderliche Nacharbeit z. B. durch Schleifen entfallen kann.

In der Fig. 3 ist der Aufbau einer Einscheiben-Trockenkupplung dargestellt bestehend aus einer konventionellen metallischen Druckplatte **10,** einer Schwungscheibe **8,** und einer Trägerplatte **1** mit aufgesetzten keramischen Reibelementen **2** mit druckelastischen Zwischenlagen **3** aus Folien aus expandiertem und rekomprimiertem Graphit. Diese Konstruktion erlaubt einen den herkömmlichen Kupplungen mit organischen Reibelementen vergleichbaren Anfahrkomfort. Die dargestellte druckelastische Lagerung mit der druckelastischen Zwischenlage **3** ohne metallische Federelemente ist ein dazu geeigneter Weg. Sowohl übliche Druckplatten aus Grauguß oder Stahl und normale Trägerplatten können verwendet werden. Die axiale Druckverteilung übernimmt die zwischen die Trägerplatte **1** und keramisches Reibelement **2** eingelegte flexible Graphitfolie als druckelastische Zwischenlage **3**. Die dauerhafte und sichere Verbindung zwischen Trägerplatte **1,** druckelastischer Zwischenlage **3** aus einer Folie aus expandiertem und rekomprimiertem Graphit und keramischem Reibelement **2** wird durch Nieten, oder bevorzugt gemäß den Verfahren des Clinch-Nietens oder Taumel-Clinch-Nietens verformten Nieten oder bei metallischen Trägerplatten besonders bevorzugt durch nietfreies Taumel-Clinchen hergestellt.

Herstellungsbedingte Toleranzen der Oberflächen von Druckplatte **8,** Schwungscheibe **10** und Trägerplatte **1** sowie den keramischen Reibelementen **2** werden durch die druckelastische Zwischenlage **3** aus einer Folie aus expandiertem und rekomprimiertem Graphit ausgeglichen, und es wird ein gutes Tragbild bereits ab den ersten Schaltungen erzeugt. Durch die guten Dämpfungseigenschaften der Graphitfolie wird die durch möglicherweise auftretendes Rupfen erzeugte Schwingungsanregung minimiert.

## Patentansprüche

1. Kupplungssystem mit einer Schwungscheibe **(10),** einer Druckplatte **(8)** und einer Mitnehmerscheibe, die eine Trägerplatte **(1)** aus Metall oder faserverstärkter Keramik umfaßt und darauf mit einer druckelastischen Zwischenlage **(3)** befestigte Reibbeläge **(2)**, **dadurch gekennzeichnet, daß** als druckelastische Zwischenlage (3) eine Folie aus expandiertem und rekomprimiertem Graphit eingesetzt ist.

2. Kupplungssystem nach Anspruch 1, **dadurch gekennzeichnet, daß** die Reibbeläge **(2)** so auf der Mitnehmerscheibe befestigt sind, daß zwar eine Bewegung in Richtung senkrecht zur Ebene der Trägerplatte von bis zu 2 mm zugelassen ist, jedoch nur ein begrenztes Spiel von 0,01 mm bis 0,5 mm in einer beliebigen Richtung in der Plattenebene zugelassen ist.

3. Kupplungssystem nach Anspruch 1, **dadurch gekennzeichnet, daß** die querschnittsbezogene Rückstellkraft der druckelastischen Zwischenlage **(3)** bezogen auf die Kompression von 5 MPa bis 250 MPa beträgt.

4. Kupplungssystem nach Anspruch 1, **dadurch gekennzeichnet, daß** die bleibende Verformung der druckelastischen Zwischenlage **(3)** maximal 50 % beträgt.

5. Kupplungssysteme nach Anspruch 1, **dadurch gekennzeichnet, daß** die Reibbeläge **(2)** aus einem keramischen Werkstoff bestehen.

6. Kupplungssysteme nach Anspruch 1, **dadurch gekennzeichnet, daß** die Reibbeläge **(2)** aus mit Fasern aus Kohlenstoff verstärkter Siliciumcarbid-Keramik bestehen.

7. Kupplungssysteme nach Anspruch 1, **dadurch gekennzeichnet, daß** die Reibbeläge **(2)** aus auf der Trägerplatte **(1)** der Mitnehmerscheibe mittels Nieten befestigt sind.

8. Kupplungssysteme nach Anspruch 7, **dadurch gekennzeichnet, daß** die Reibbeläge **(2)** durch Nieten **(4),** die nach den Verfahren des Clinch-Nietens oder des Taumel-Clinch-Nietens verformt sind, oder durch Taumel-Clinchen auf der Trägerplatte **(1)** der Mitnehmerscheibe befestigt sind.

## Claims

1. A clutch system having a flywheel (10), a pressure plate (8) and a driven plate which comprises a carrier plate (1) of metal or fiber-reinforced ceramic and friction linings (2) fastened thereto with a compression-elastic intermediate layer (3), wherein the compression-elastic intermediate layer (3) used is a foil of expanded and recompressed graphite.

2. The clutch system as claimed in claim 1, wherein the friction linings (2) are fastened to the driven plate in such a way that, although a movement of up to 2 mm is allowed in the direction perpendicular to the plane of the carrier plate, only limited play of 0.01 mm to 0.5 mm is allowed in any direction in the plate plane.

3. The clutch system as claimed in claim 1, wherein the restoring force, relative to the cross section, of the compression-elastic intermediate layer (3) relative to the compression is from 5 MPa to 250 MPa.

4. The clutch system as claimed in claim 1, wherein the permanent deformation of the compression-elastic intermediate layer (3) is at most 50%.

5. The clutch system as claimed in claim 1, wherein the friction linings (2) are made of a ceramic material.

6. The clutch system as claimed in claim 1, wherein the friction linings (2) are made of silicon carbide ceramic reinforced with carbon fibers.

7. The clutch system as claimed in claim 1, wherein the friction linings (2) are fastened to the carrier plate (1) of the driven plate by means of rivets.

8. The clutch system as claimed in claim 7, wherein the friction linings (2) are fastened to the carrier plate (1) of the driven plate by rivets (4), which are worked as claimed in the methods of clinch riveting or wobble clinch riveting, or by wobble clinching.

## Revendications

1. Système d'embrayage avec un volant moteur (10), un plateau de pression (8) et un disque d'entraînement qui comporte une plaque porteuse (1) en métal ou céramique renforcée par des fibres et des garnitures de friction (2) fixées dessus avec une couche intermédiaire (3) élastique en compression, **caractérisé en ce qu'**un film en graphite expansé et recomprimé est utilisé comme couche intermédiaire (3) élastique en compression.

2. Système d'embrayage selon la revendication 1, **caractérisé en ce que** les garnitures de friction (2) sont fixées sur le disque d'entraînement de sorte que certes, un mouvement dans la direction perpendiculaire au plan de la plaque porteuse de 2 mm au maximum soit autorisé mais seul un jeu limité compris entre 0,01 et 0,5 mm dans une direction quelconque dans le plan de la plaque soit autorisé.

3. Système d'embrayage selon la revendication 1, **caractérisé en ce que** la force de rappel relative à la section transversale de la couche intermédiaire (3) élastique en compression par rapport à la compression est comprise entre 5 et 250 MPA.

4. Système d'embrayage selon la revendication 1, **caractérisé en ce que** la déformation permanente de la couche intermédiaire (3) élastique en compression s'élève à 50 % au maximum.

5. Systèmes d'embrayage selon la revendication 1, **caractérisés en ce que** les garnitures de friction (2) se composent d'un matériau céramique.

6. Systèmes d'embrayage selon la revendication 1, **caractérisés en ce que** les garnitures de friction (2) se composent de céramique et de carbure de silicium renforcés par des fibres de carbone.

7. Systèmes d'embrayage selon la revendication 1, **caractérisés en ce que** les garnitures de friction (2) sont fixées sur la plaque porteuse (1) du disque d'entraînement au moyen de rivets.

8. Systèmes d'embrayage selon la revendication 7, **caractérisés en ce que** les garnitures de friction (2) sont fixées par des rivets (4) qui sont déformés selon les procédés du rivetage sertissage ou du rivetage sertissage par fluage radial, ou par rivetage par fluage radial sur la plaque porteuse (1) du disque d'entraînement.
